# EUROPEAN PATENT SPECIFICATION

(11) **EP 3 178 690 B1**
(45) Date of publication and mention of the grant of the patent: **30.01.2019**
(21) Application number: 16203063.9
(22) Date of filing: 09.12.2016
(51) Int. Cl.: B60N 2/00

(54) **SEATING DETECTION DEVICE**
SITZDETEKTIONSVORRICHTUNG
DISPOSITIF DE DÉTECTION D'ASSISE

(30) Priority: 11.12.2015 JP 2015242391; 01.11.2016 JP 2016214322
(43) Date of publication of application: 14.06.2017
(73) Proprietor: AISIN SEIKI KABUSHIKI KAISHA, Kariya-shi Aichi-ken 448-8650 (JP)
(72) Inventor: MIZOKAWA, Yoshihiro, Kariya-shi, Aichi-ken 448-8650 (JP); YANAI, Keiichi, Kariya-shi, Aichi-ken 448-8650 (JP)
(74) Representative: Intès, Didier Gérard André

(56) References cited:
- JP-A- 2009 107 560
- JP-A- 2012 188 044

## Description

### TECHNICAL FIELD

This disclosure relates to a seating detection device and a vehicle rear seat comprising the seating detection device.

### BACKGROUND DISCUSSION

As a seating detection device, for example, a seating detection device disclosed in JP 2009-107560A (Reference 1) is known in the related art. The seating detection device includes a seating sensor formed as a so-called membrane switch, and is located on a seating surface portion of a vehicle seat to detect (determine) whether a person exists (sits down) on the seat.

JP 2009-107560A (Reference 1) assumes that the seating detection device is located in a single seat, such as, for example, a passenger seat, and detects whether a person exists in a detection range of the seating sensor which is reduced on the assumption that a change in the posture of a person who sits on the seat is small. Meanwhile, there is a rear seat in which plural (e.g., three) seats are arranged side by side, like a seat mounted on the rear seat side of a sedan-type vehicle. In such a rear seat, because a console, a dashboard, or the like is not provided around the rear seat unlike a passenger seat, the change in the posture of a person who sits on the rear seat is larger than that in a passenger seat. Accordingly, the range in the rear seat on which a person can sit is wider than that in the passenger seat. When a seating sensor, which is the same as that in the passenger seat, is located in the rear seat, the detection range of the seating sensor may often be insufficient in some cases. Therefore, there is a possibility that it may not be correctly detect whether a person sits on the rear seat.

### SUMMARY

Thus, a need exists for a seating detection device that is capable of suitably detecting whether a person exists on each seat of a rear seat.

The present invention provides a vehicle rear seat which is defined in claim 1 and comprises a seating detection device. The seating detection device includes: a first seating sensor installed in each of opposite ends of a plurality of seats, which are arranged side by side in a vehicle width direction in a rear seat row located in a rear side in a vehicle, the first seating sensor being located in a seating surface portion of the corresponding seat; and a plurality of first load detection switches installed in the first seating sensors to be brought into a conducting state when a predetermined load is applied thereto, the plurality of first load detection switches being arranged side by side in the vehicle width direction. Among the plurality of first load detection switches, two adjacent first load detection switches, which are installed at any one side of a first reference line, which extends in a vehicle longitudinal direction of the seating surface portion, in the vehicle width direction, are connected in series, and two adjacent first load detection switches, which are connected in parallel and arranged with the first reference line being interposed therebetween, and two first load detection switches, which are connected in parallel and installed at opposite ends, are connected in series.

According to this configuration, the first seating sensor is brought into the conducting state when it is established that the two adjacent first load detection switches, which are installed at any one side of the first reference line in the vehicle width direction, are brought together into the conducting state and/or that any one of the two adjacent first load detection switches, between which the first reference line is interposed, and any one of the first load detection switches, which are installed at opposite ends, are brought together into the conducting state. The first seating sensor is brought into the non-conducting state in other cases. That is, when it is established that the two adjacent first load detection switches, which are installed at any one side of the first reference line in the vehicle width direction, are brought together into the conducting state and/or that any one of the two adjacent first load detection switches, between which the first reference line is interposed, and any one of the first load detection switches, which are installed at opposite ends, are brought together into the conducting state, the first seating sensor detects that a person exists on the seat. Here, assuming that, for example, the width direction dimension of the seats at opposite ends of the rear seat in the vehicle width direction is set to a relatively large value, in the case where a person sits on the seat in a normal posture (hereinafter referred to as "sit normally"), the first seating sensor basically receives a load from the opposite thighs of the person or the opposite side portions of the hips connected thereto. At this time, the first seating sensor is brought into the conducting state when any one of the two adjacent first load detection switches, between which the first reference line is interposed, and any one of the first load detection switches, which are installed at opposite ends, i.e. the two first load detection switches, between which the first reference line is interposed, are brought together into the conducting state as a predetermined load is applied thereto. In this way, the first seating sensor may detect that a person exists on the seat. In addition, in the case where a person sits on the seat to tilt in the vehicle width direction (hereinafter referred to as "sits laterally"), the first seating sensor basically receives a load from one thigh or one side portion of a hip connected thereto. At this time, the first seating sensor is brought into the conducting state when the two adjacent first load detection switches, which are installed at any one side of the first reference line in the vehicle width direction, are brought together into the conducting state as a predetermined load is applied thereto. This enables the first seating sensor to detect that a person exists on the seat.

It is preferable that the vehicle rear seat includes three seats, and each of the seats at the opposite ends of the rear seat in the vehicle width direction is provided with the first seating sensor.

It is preferable that the first seating sensor includes a first load detection group that includes four first load detection switches.

It is preferable that the first load detection group is linearly symmetrically installed about the first reference line.

It is preferable that the first seating sensor includes: two first load detection groups arranged to be approximately parallel to each other in the vehicle width direction; a connecting portion configured to connect central portions of the two first load detection groups; and an extension portion connected to a central portion of the connecting portion to extend in the vehicle width direction.

It is preferable that the first seating sensor is a membrane switch.

It is preferable that the seating detection device further includes: a second seating sensor located in the seating surface portion of a center seat of the rear seat in the vehicle width direction; and a plurality of second load detection switches installed in the second seating sensor to be brought into a conducting state when a predetermined load is applied thereto, the second load detection switches being arranged side by side in the vehicle longitudinal direction, in which among the plurality of second load detection switches, two adjacent second load detection switches, which are installed at any one side of a second reference line, which extends in the vehicle width direction of the seating surface portion, in the vehicle longitudinal direction, are connected in series, and two adjacent second load detection switches, which are connected in parallel and arranged with the second reference line being interposed therebetween, and two second load detection switches, which are connected in parallel and installed at opposite ends, are connected in series.

According to this configuration, the second seating sensor is brought into the conducting state when it is established that the two adjacent second load detection switches, which are installed at any one side of the second reference line in the vehicle longitudinal direction, are brought together into the conducting state and/or that any one of the two adjacent second load detection switches, between which the second reference line is interposed, and any one of the second load detection switches, which are installed at opposite ends, are brought together into the conducting state. The second seating sensor is brought into the non-conducting state in other cases. That is, when it is established that the two adjacent second load detection switches, which are installed at any one side of the second reference line in the vehicle longitudinal direction, are brought together into the conducting state and/or that any one of the two adjacent second load detection switches, between which the second reference line is interposed, and any one of the second load detection switches, which are installed at opposite ends, are brought together into the conducting state, the second seating sensor detects that a person exists on the seat. Here, assuming that, for example, the width direction dimension of the center seat in the vehicle width direction is set to a relatively small value and that the person sits normally on the seat, the second seating sensor basically receives a load from the opposite thighs of the person or the hips connected thereto. In this case, the second seating sensor is brought into the conducting state when the two adjacent second load detection switches, which are installed at any one side of the second reference line in the vehicle longitudinal direction, are brought into the conducting state as a predetermined load is applied thereto, or any one of the two adjacent second load detection switches, between which the second reference line is interposed, and any one of the second load detection switches, which are installed at opposite ends, i.e. the two second load detection switches arranged, between which the second reference line is interposed, are brought together into the conducting state as a predetermined load is applied thereto. This enables the second seating sensor to detect that a person exists on the seat. In addition, when a person sits on the seat to tilt forward of the vehicle (hereinafter referred to as "sits forwardly"), the second seating sensor basically receives a load from the hips of the person. At this time, the second seating sensor is brought into the conducting state when any two adjacent second load detection switches, which are arranged closer to the front side of the vehicle than the second reference line, are brought into the conducting state as a predetermined load is applied thereto. This enables the second seating sensor to detect that a person exists on the seat.

It is preferable that the second seating sensor includes a second load detection group that includes four second load detection switches.

It is preferable that the second load detection group is linearly symmetrically installed about the second reference line.

It is preferable that the second seating sensor includes: two second load detection groups arranged to be approximately parallel to each other in the vehicle longitudinal direction; a connecting portion configured to connect central portions of the two second load detection groups; and an extension portion connected to a central portion of the connecting portion to extend in the vehicle longitudinal direction.

It is preferable that the second reference line is arranged to cross the first reference line.

It is preferable that the first seating sensor and the second seating sensor have the same shape.

It is preferable that the second seating sensor is a membrane switch.

The seating detection device of this disclosure has the effect of suitably detecting whether a person exists on each seat of a rear seat.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a perspective view illustrating a structure of a rear seat to which an embodiment of a seating detection device is applied;
Fig. 2 is a plan view illustrating the structure of the seating detection device according to the embodiment;
Figs. 3A and 3B are a plan view illustrating the structure of a first seating sensor at one side and an equivalent circuit diagram thereof, respectively, and Fig. 3C is a plan view illustrating the structure of a second seating sensor;
Figs. 4A to 4C are plan views each illustrating an operation of the seating detection device of the embodiment, in which Figs. 4A and 4B illustrate the states where a person exists on the first seating sensor at one side and the second seating sensor, respectively, and Fig. 4C illustrates the state where a CRS is mounted on the first seating sensor at one side; and
Figs. 5A and 5B are a plan view illustrating a structure of a first seating sensor according to an alternative embodiment of the seating detection device, and an equivalent circuit diagram thereof, respectively.

### DETAILED DESCRIPTION

Hereinafter, an exemplary embodiment of a seating detection device will be described. In addition, hereinafter, a vehicle longitudinal direction is referred to as a "longitudinal direction".

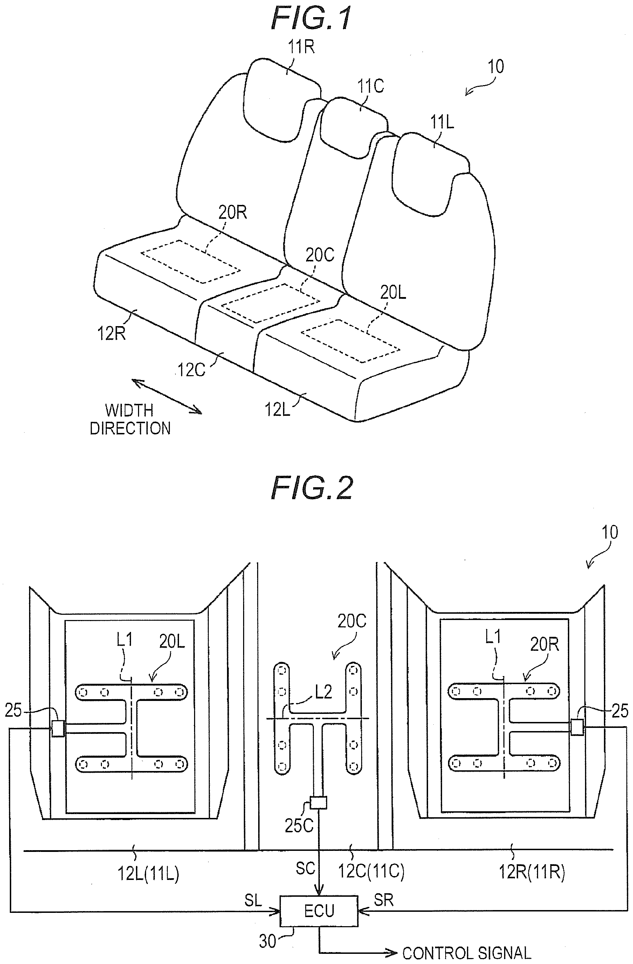

As illustrated in Fig. 1, in rear side seats 10 that is mounted, for example, on the rear seat side of a sedan-type vehicle, three seats 11R, 11C, 11L are arranged side by side in a vehicle width direction. The widthwise dimension of each of the seats 11R, 11L, which are installed at opposite sides in the vehicle width direction is set to be larger than (e.g., about two times) the widthwise dimension of the seat 11C. In addition, first seating sensors 20R, 20L are arranged on seating surface portions 12R, 12L of the seats 11R, 11L at opposite sides in the vehicle width direction. In addition, a second seating sensor 20C is arranged on a seating surface portion 12C of the seat 11C, which is installed at the center in the vehicle width direction. As also illustrated in Fig. 2, both the first seating sensors 20R, 20L and the second seating sensor 20C are formed in the same shape. Both the first seating sensors 20R, 20L are symmetrically (bilaterally symmetrically) arranged in the vehicle width direction. The second seating sensor 20C is oriented at approximately 90 degrees in relation to the first seating sensors 20R, 20L.

In addition, both the first seating sensors 20R, 20L are arranged to extend the vehicle width direction (i.e., to be laterally long) to match the dimension of the seats 11R, 11L (the seating surface portions 12R, 12L). That is, the first seating sensors 20R, 20L are arranged to extend in the vehicle width direction, i.e. to be approximately parallel to the vehicle width direction. In addition, the second seating sensor 20C is arranged to extend in the longitudinal direction (i.e., to be longitudinally long) to match the dimension of the seat 11C (the seating surface portion 12C). That is, the second seating sensor 20C is arranged to extend in the longitudinal direction, i.e. to be approximately parallel to the longitudinal direction.

In addition, a first center line L1 serving as a first reference line extending in the longitudinal direction is formed on each of the seating surface portions 12R, 12L. In addition, a second center line L2 serving as a second reference line extending in the vehicle width direction is formed on the seating surface portion 12C. Moreover, the first center line L1 is oriented to cross the second center line L2. Specifically, the first center line L1 is oriented to be tilted at approximately 90 degrees in relation to the second center line L2.

Each of the first seating sensors 20R, 20R and the second seating sensor 20C is formed as a membrane switch in which a pair of contact sheets, each of which is formed by printing conductive ink (e.g., silver paste or carbon paste) on an insulating film (e.g. a polyester film), is stacked one on another via a spacer (e.g., a polyester film) therebetween. In addition, the first seating sensors 20R, 20L have a longitudinally symmetrical H shape in the seats 11R, 11L. The second seating sensor 20C has a bilaterally symmetrical H shape in the seat 11C.

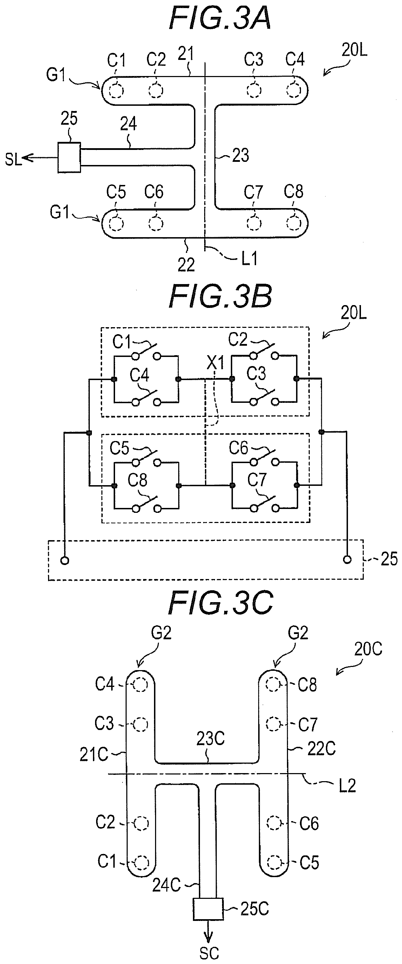

As illustrated in Fig. 3A, the first seating sensor 20L at one side integrally includes a pair of front and rear detecting portions 21, 22 that extends in the vehicle width direction, a connecting portion 23 that longitudinally interconnects the central portions of the detecting portions 21, 22 in the vehicle width direction, and an extension portion 24 that is connected to the central portion of the connecting portion 23 in the longitudinal direction and extends from the seat 11C in the vehicle width direction. In addition, a connector 25 for external connection is connected to the tip end of the extension portion 24.

The detecting portion 21 includes plural (e.g., four in the embodiment disclosed here) cells C1, C2, C3, C4 that serve as first load detection switches. The cells C1, C2, C3, C4 are arranged side by side in the vehicle width direction to be linearly symmetrical about the first center line L1, which extends in the longitudinal direction along the connecting portion 23. The cells C1 to C4 are arranged from the outer side (the opposite side to the seating surface portion 12C) to the seating surface portion 12C side in this sequence. That is, the cells C1, C2 and the cells C3, C4 are respectively arranged on the outer side and the seating surface portion 12C side with the first center line L1 being interposed therebetween.

Similarly, the detecting portion 22, which is located behind the detecting portion 21, includes plural (e.g., four in the embodiment disclosed here) cells C5, C6, C7, C8 that serve as the first load detection switches. The cells C5, C6, C7, C8 are arranged side by side in the vehicle width direction to be symmetrical about the first center line L1. The cells C5 to C8 are arranged from the outer side (the opposite side to the seating surface portion 12C) to the seating surface portion 12C side in this sequence. That is, the cells C5, C6 and the cells C7, C8 are respectively arranged on the outer side and the seating surface portion 12C side with the first center line L1 being interposed therebetween.

Each of the cells C1 to C8 is brought into a conducting state when a predetermined load is applied thereto. That is, as illustrated as an equivalent circuit in Fig. 3B, in the cells C1 to C4 located in the detecting portion 21, the cells C1, C4, which are connected in parallel, and the cells C2, C3, which are connected in parallel, are connected in series. That is, any two cells C1, C2 or C3, C4, which are adjacent to each other without the first center line L1 therebetween, are connected in series, and any two cells C1, C3 or C2, C4, which are alternately adjacent to each other with the first center line L1 being interposed therebetween, are connected in series. In other words, the two adjacent cells C1, C2 or C3, C4, which are installed at any one side (the right side or the left side in Fig. 3A) of the first center line L1 in the vehicle width direction, are connected in series, and the two adjacent cells C2, C3, which are connected in parallel and arranged with the first center line L1 being interposed therebetween, and two cells C1, C4, which are connected in parallel and installed at opposite ends, are connected in series.

In addition, in the cells C5 to C8 positioned in the detecting portion 22, the cells C5, C8, which are connected in parallel, and the cells C6, C7, which are connected in parallel, are connected in series. That is, any two cells C5, C6 or C7, C8, which are adjacent to each other without the first center line L1 therebetween, are connected in series, and any two cells C5, C7 or C6, C8, which are alternately adjacent to each other with the first center line L1 being interposed therebetween, are connected in series. In other words, the two adjacent cells C5, C6 or C7, C8, which installed at any one side (the right side or the left side in Fig. 3A) of the first center line L1 in the vehicle width direction, are connected in series, and the two adjacent cells C6, C7 which are connected in parallel and arranged with the first center line L1 being interposed therebetween, and the two cells C5, C8, which are connected in parallel and installed at opposite ends, are connected in series.

In addition, the electric circuit of the cells C1 to C4 and the electric circuit of the cells C5 to C8 are connected in parallel. That is, the first seating sensor 20L itself is brought into the conducting state when, in the detecting portion 21, any two adjacent cells C1, C2 or C3, C4, which are installed at any one side (the right side or the left side in Fig. 3A) of the first center line L1 in the vehicle width direction, are brought together into the conducting state, or any one of the two adjacent cells C3, C2, between which the first center line L1 is interposed, and any one of the cells C1, C4, which are installed at opposite ends, are brought together into the conducting state. Alternatively, the first seating sensor 20L is brought into the conducting state when, in the detecting portion 22, any two adjacent cells C5, C6 or C7, C8, which are installed at any one side (the right side or the left side in Fig. 3A) of the first center line L1 in the vehicle width direction, are brought together into the conducting state, or any one of the two adjacent cells C7, C6, between which the first center line L1 is interposed and any one of the cells C5, C8 installed at opposite ends are brought together into the conducting state. In addition, the first seating sensor 20L outputs a detection signal SL depending on the conducting state and the non-conducting state thereof from the connector 25. The cells C1 to C4 positioned in the detecting portion 21 and the cells C5 to C8 positioned in the detecting portion 22 of the first seating sensor 20L respectively constitute first load detection groups G1. That is, the first seating sensor 20L has the structure in which plural (e.g., two in the embodiment disclosed here) first load detection groups G1 are arranged side by side in the longitudinal direction.

In addition, as illustrated in Fig. 3A, each of the first load detection groups G1 of the detecting portions 21, 22 is formed to be linearly symmetrical about the first center line L1.

The first seating sensor 20R, which is located in the seat 11R at the opposite side in the vehicle width direction, has the same structure as the first seating sensor 20L, except that they are symmetrically arranged as described above, and therefore is described in the same manner as the first seating sensor 20L by reversing the front and rear sides and the left and right sides. The first seating sensor 20R outputs a detection signal SR (see Fig. 2) depending on the conducting state and the non-conducting state thereof from the connector 25.

As illustrated in Fig. 3C, the second seating sensor 20C is tilted at 90 degrees in relation to the first seating sensor 20L as described above, and integrally includes the same detecting portions 21C, 22C, a connecting portion 23C, and an extension portion 24C. The detecting portions 21C, 22C make a pair in the vehicle width direction to extend in the longitudinal direction, and the connecting portion 23C interconnects the longitudinal central portions of the detecting portions 21C, 22C in the vehicle width direction. In addition, the extension portion 24C is connected to the central portion of the connecting portion 23 in the vehicle width direction to extend rearward. In addition, a connector 25C for external connection is connected to the tip end of the extension portion 24C.

In addition, cells C1 to C4, which serve as second load detection switches in the second seating sensor 20C, are arranged side by side in the longitudinal direction in the detecting portion 21C to be linearly symmetrical about the second center line L2, which extends in the vehicle width direction along the connecting portion 23C. Similarly, cells C5 to C8, which serve as the second load detection switches in the second seating sensor 20C, are arranged side by side in the longitudinal direction in the detecting portion 22C to be symmetrical in reference to the second center line L2. The equivalent circuit of the second seating sensor 20C formed by the cells C1 to C8 is the same as that of the first seating sensor 20L.

Accordingly, the second seating sensor 20C is brought into the conducting state when, in the detecting portion 21C, any two adjacent cells C1, C2 or C3, C4, which are installed at any one side (the upper side or the lower side in Fig. 3C) of the second center line L2 in the longitudinal direction, are brought into the conducting state, or any one of the two adjacent cells C3, C2, between which the second center line L2 is interposed and any one of the cells C1, C4, which are installed at opposite ends, are brought into the conducting state. Alternatively, the second seating sensor 20C is brought into the conducting state when, in the detecting portion 22C, any two adjacent cells C5, C6 or C7, C8, which are installed at any one side (the upper side or the lower side in Fig. 3C) of the second center line L2 in the longitudinal direction, are brought into the conducting state, or any one of the two adjacent cells C7, C6, between which the second center line L2 is interposed and any one of the cells C5, C8, which are installed at opposite ends, are brought into the conducting state. In addition, the second seating sensor 20C outputs a detection signal SC depending on the conducting state and the non-conducting state thereof from the connector 25C. The cells C1 to C4 and the cells C5 to C8 of the second seating sensor 20C respectively constitute second load detection groups G2. That is, the second seating sensor 20C has the structure in which plural (e.g. two in the embodiment disclosed here) second load detection groups G2 are arranged side by side in the vehicle width direction.

In addition, as illustrated in Fig. 2 and Fig. 3C, the respective second load detection groups G2 of the detecting portions 21C, 22C are formed to be linearly symmetrical about the second center line L2.

As illustrated in Fig. 2, the connectors 25 of the first seating sensors 20R, 20L and the connector 25C of the second seating sensor 20C are electrically connected to an electronic control unit (ECU) 30. The ECU 30 determines whether a person exists on a corresponding seat 11R, 11L or 11C based on the detection signals SR, SL, SC output from the first seating sensors 20R, 20L and the second seating sensor 20C. In addition, the ECU 30 outputs a control signal based on the determination result to an appropriate device. Specifically, the ECU 30 outputs a control signal to drive a notification member (e.g., a warning lamp), which prompts the wearing of a seat belt, for example, when it is determined that a person exists on any one seat 11R, 11L, 11C.

Subsequently, the actions of the embodiment disclosed here will be described.

Each of the first seating sensors 20R, 20L is brought into the conducting state when, in the detecting portion 21, it is established that any two adjacent cells C1, C2 or C3, C4, which are installed at any one side (the right side or the left side in Fig. 3A) of the first center line L1 in the vehicle width direction, are brought together into the conducting state, and/or that any one of the two adjacent cells C3, C2, between which the first center line L1 is interposed, and any one of the cells C1, C4, which are installed at opposite ends, are brought together into the conducting state. Alternatively, each of the first seating sensors 20R, 20L is brought into the conducting state when in the detecting portion 22, it is established that any two adjacent cells C5, C6 or C7, C8, which are installed at any one side (the right side or the left side in Fig. 3A) of the first center line L1 in the vehicle width direction, are brought together into the conducting state and/or that any one of the two adjacent cells C7, C6 between which the first center line L1 is interposed and any one of the cells C5, C8, which are installed at opposite ends, are brought together into the conducting state. Meanwhile, each of the first seating sensors 20R, 20L is brought into the non-conducting state in a case other than the above-described cases. In addition, each of the first seating sensors 20R, 20L detects that a person exists on the seat 11R or 11L when it is brought into the conducting state.

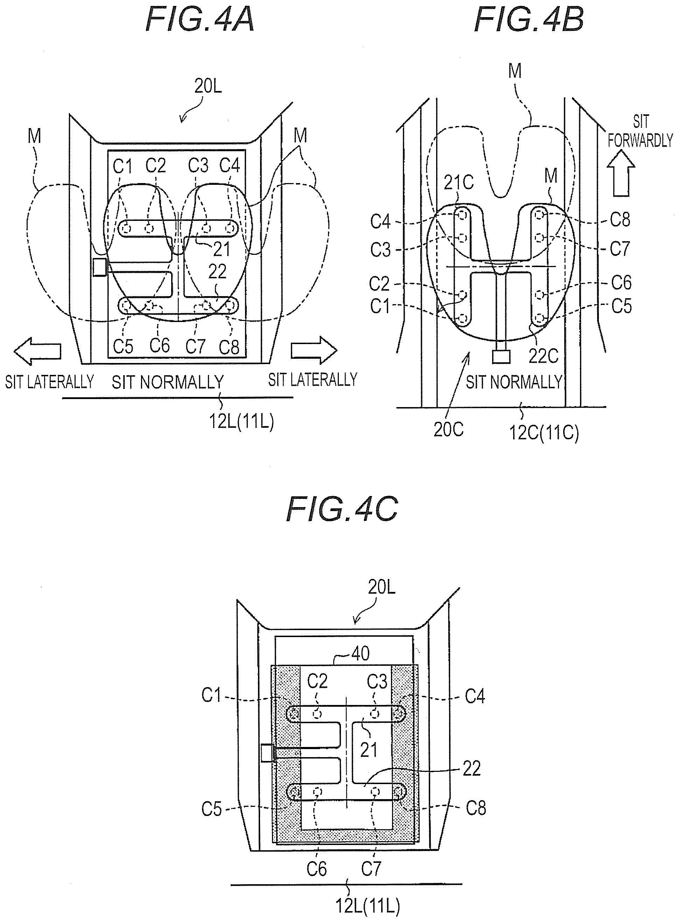

Here, as represented by the solid line in Fig. 4A, in the case of a normal seating where a person M sits on, for example, the seat 11L at one side in the vehicle width direction not to tilt in relation to the seating surface portion 12L in the vehicle width direction and the longitudinal direction, the first seating sensor 20L basically receives a load from the opposite thighs of the person M or the opposite side portions of the hips connected thereto. In this case, the first seating sensor 20L is brought into the conducting state when, in the detecting portion 21, any one of the two adjacent cells C3, C2, between which the first center line L1 is interposed, and any one of cells C1, C4, which are installed at opposite ends, i.e. the two cells C1, C3 or C2, C4, between which the first center line L1 is interposed, are brought together into the conducting state upon receiving a predetermined load. Alternatively, the first seating sensor 20L is brought into the conducting state when, in the detecting portion 22, any one of the two adjacent cells C7, C6, between which the first center line L1 is interposed and any one of the cells C5, C8, which are installed at opposite ends, i.e. the two cells C5, C7 or C6, C8, between which the first center line L1 is interposed, are brought together into the conducting state as a predetermined load is applied thereto. This enables the first seating sensor 20L to detect that the person M exists on the seat 11L.

In addition, as illustrated by two-dot chain lines in Fig. 4A, when the person M sits laterally on the seat 11L, the first seating sensor 20L basically receives a load from one thigh or one side portion of the hip connected thereto. In this case, the first seating sensor 20L is brought into the conducting state when, in the detecting portion 21, any two cells C1, C2 or C3, C4 arranged adjacent to each other without the first center line L1 therebetween are brought into the conducting state as a predetermined load is applied thereto. Alternatively, the first seating sensor 20L is brought into the conducting state when, in the detecting portion 22, any two cells C5, C6 or C7, C8 arranged adjacent to each other without the first center line L1 therebetween are brought into the conducting state as a predetermined load is applied thereto. This enables the first seating sensor 20L to detect that the person M exists on the seat 11L.

This is the same as in the opposite seat 11R.

Meanwhile, the second seating sensor 20C is brought into the conducting state when, in the detecting portion 21C, it is established that any two adjacent cells C1, C2 or C3, C4, which are installed at any one side (the upper side or the lower side in Fig. 3C) of the second center line L2 in the longitudinal direction, are brought together into the conducting state and/or that any one of the two adjacent cells C3, C2, between which the second center line L2 is interposed, and any one of the cells C1, C4, which are installed at opposite ends, are brought together into the conducting state. Alternatively, the second seating sensor 20C is brought into the conducting state when, in the detecting portion 22C, it is established that any two adjacent cells C5, C6 or C7, C8, which are installed at any one side (the upper side or the lower side in Fig. 3C) of the second center line L2 in the longitudinal direction, are brought together into the conducting state and/or that any one of the two adjacent cells C7, C6, between which the second center line L2 is interposed, and any one of the cells C5, C8, which are installed at opposite ends, are brought together into the conducting state. Meanwhile, the second seating sensor 20C is brought into the non-conducting state in a case other than the above-described cases. In addition, the second seating sensor 20C detects that a person exists on the seat 11C when it is brought into the conducting state.

Here, as illustrated by the solid lines in Fig. 4B, in the case where a person M sits normally on the seat 11C, the second seating sensor 20C basically receives a load from the opposite thighs of the person M or the hips connected thereto. At this time, the second seating sensor 20C is brought into the conducting state when, in the detecting portion 21C, any two adjacent cells C1, C2 or C3, C4, which are installed at one side of the second center line L2 in the longitudinal direction, are brought together into the conducting state as a predetermined load is applied thereto, or any one of the two adjacent cells C3, C2, between which the second center line L2 is interposed, and any one of the cells C1, C4, which are installed at opposite ends, i.e. the two cells C1, C3 or C2, C4, between which the second center line L2 is interposed, are brought together into the conducting state as a predetermined load is applied thereto. Alternatively, the second seating sensor 20C is brought into the conducting state when, in the detecting portion 22C, any two adjacent cells C5, C6 or C7, C8, which are installed at one side of the second center line L2 in the longitudinal direction, are brought together into the conducting state as a predetermined load is applied thereto, or any one of the two adjacent cells C7, C6, between which the second center line L2 is interposed, and any one of the cells C5, C8, which are installed at opposite ends, i.e. the two cells C5, C7 or C6, C8, between which the second center line L2 is interposed are brought together into the conducting state as a predetermined load is applied thereto. This enables the second seating sensor 20C to detect that the person M exists on the seat 11C.

In addition, as represented by the two-dot chain lines in Fig. 4B, when a person M sits forwardly on the seat 11C, the second seating sensor 20C basically receives a load from the hips of the person M. In this case, the second seating sensor 20C is brought into the conducting state when, in the detecting portion 21C, the two adjacent cells C3, C4 arranged closer to the front of the vehicle than the second center line L2 (i.e. arranged without the second sensor line L2 therebetween) are brought into the conducting state as a predetermined load is applied thereto. Alternatively, the second seating sensor 20C is brought into the conducting state when, in the detecting portion 22C, the two adjacent cells C7, C8 arranged closer to the front side of the vehicle than the second center line L2 (i.e. arranged without the second sensor line L2 therebetween) are brought into the conducting state as a predetermined load is applied thereto. This enables the second seating sensor 20C to detect that the person M exists on the seat 11C.

In addition, as illustrated in Fig. 4C, in the case where a Child Restraint System (CRS) 40 is installed, for example, on the seat 11L, it is known that a load is concentrated on an approximately U-shaped range (illustrated as a pattern), which follows the outer shape of the seating surface portion 12L, due to the uneven distribution of a mounting load. In this case, the first seating sensor 20L remains in the non-conducting state, although, in the detecting portion 21, the cells C1, C4 are brought together into the conducting state as a predetermined level of load is applied thereto. Alternatively, the first seating sensor 20L remains in the non-conducting state, although, in the detecting portion 22, the cells C5, C8 are brought together into the conducting state as a predetermined level of load is applied thereto. As such, even if the CRS 40 is installed on the seat 11L, the possibility that the first seating sensor 20L incorrectly detects the presence of a person M is reduced.

As described above in detail, according to the embodiment disclosed here, the following effects may be obtained.
(1) In the embodiment disclosed here, when a person M sits normally or even sits laterally on the seat 11R or 11L, the first seating sensor 20R or 20L may detect that the person M exists on the seat 11R or 11L. Meanwhile, when a person M sits normally or even sits forwardly on the seat 11C, the second seating sensor 20C may detect that the person M exists on the seat 11C.
(2) In the embodiment disclosed here, the first seating sensor 20R or 20L is configured such that the plural first load detection groups G1, each of which includes the cells C1 to C4 or the cells C5 to C8, are arranged side by side in the longitudinal direction. Similarly, the second seating sensor 20C is configured such that the plural second load detection groups G2, each of which includes the cells C1 to C4 or the cells C5 to C8, are arranged side by side in the vehicle width direction. Accordingly, the detection region of the first seating sensors 20R, 20L and the second seating sensor 20C is enlarged, which may further enhance the accuracy of detecting whether a person exists on a corresponding seat.
(3) In the embodiment disclosed here, the first seating sensors 20R, 20L and the second seating sensor 20C (three seating sensors) have the same shape. Accordingly, the first seating sensors 20R, 20L and the second seating sensor 20C include common elements, which may reduce the number of manufacturing processes and the manufacturing costs.
(4) In the embodiment disclosed here, even if the CRS 40 is installed on the seat 11L, the possibility that the first seating sensor 20L incorrectly detects the presence of the person M due to the CRS 40 is reduced. This is the same as when the CRS 40 is installed on the seat 11R.

In addition, the above-described embodiment may be changed as follows.

As represented by line X1 in Fig. 3B, it may be considered to short-circuit a connection portion between the cells C1, C4 and the cells C2, C3 and a connection portion between the cells C5, C8 and the cells C6, C7. In addition, this circuit configuration may be employed in the first seating sensor 20R or the second seating sensor 20C.

In the above-described embodiment, the first seating sensors 20R, 20L and the second seating sensor 20C (three seating sensors) may have different shapes.

In the above-described embodiment, each first seating sensor 20R or 20L may include three or more first load detection groups G1 arranged side by side. Similarly, the second seating sensor 20C may include three or more second load detection groups G2 arranged side by side.

In the above-described embodiment, any one of the cells C1 to C4 and the cells C5 to C8 of each first seating sensor 20R or 20L may be omitted. That is, in each first seating sensor 20R or 20L, the first load detection groups G1 may not be plurally arranged side by side. Similarly, any one of the cells C1 to C4 and the cells C5 to C8 of the second seating sensor 20C may be omitted. That is, in the second seating sensor 20C, the second load detection groups G2 may not be plurally arranged side by side.

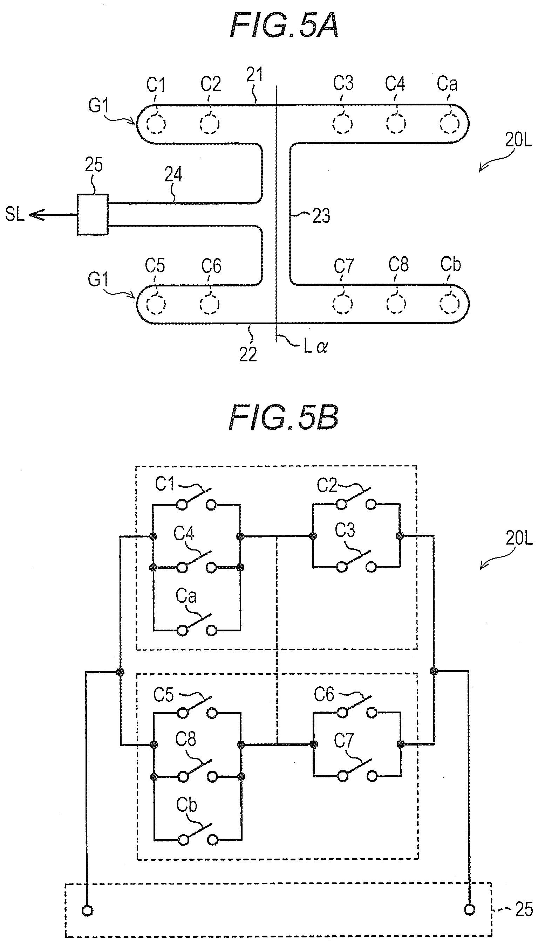

In the above-described embodiment, the number of cells arranged side by side in each detecting portion 21, 22, 21C or 22C may not be four, and may be appropriately changed. For example, as illustrated in Fig. 5A, the number of cells in each detecting portion 21 or 22 may be five. Specifically, a cell Ca may be installed next to the cell C4 in the detecting portion 21, and a cell Cb may be installed next to the cell C8 in the detecting portion 22.

In the above-described embodiment, as illustrated in Figs. 5A and 5B, in the detecting portion 21 of the first seating sensor 20L, two adjacent cells C2, C3, which are connected in parallel with a first reference line La being interposed therebetween, and two cells C1, Ca, which are connected in parallel and installed at opposite ends, may be connected in series. That is, in the detecting portion 21 of the first seating sensor 20L, the two cells C1, Ca, which are adjacent to each other with the first reference line La and two other cells being interposed therebetween, may be connected in series.

Similarly, in the detecting portion 22 of the first seating sensor 20L, two adjacent cells C6, C7, which are connected in parallel with the first reference line La being interposed therebetween, and two cells C5, Cb, which are connected in parallel and installed at opposite ends, may be connected in series. That is, in the detecting portion 22 of the first seating sensor 20L, the two cells C5, Cb, which are adjacent to each other with the first reference line La and two other cells being interposed therebetween, may be connected in series.

In the above-described embodiment, each detecting portion 21, 22, 21C or 22C is not necessarily be linearly symmetrical about the first center line L1 that serves as the first reference line and the second center line L2 that serves as the second reference line. For example, as illustrated in Fig. 5A, in the case where each detecting portion 21 or 22 includes five cells, the first reference line La may be located between the cells C2, C3 and between the cells C6, C7.

In the above-described embodiment, the second seating sensor 20C may not be located in the seating surface portion 12C. That is, at least one of the first seating sensors 20R, 20L may be located merely in the seating surface portions 12R, 12L.

In the above-described embodiment, in the first seating sensors 20R, 20L, the extension portion 24 may be provided to be approximately parallel to the vehicle width direction. However, the extension portion 24 may be formed to extend from the detecting portion 21 or 22 in the longitudinal direction.

The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive. Variations and changes may be made by others, and equivalents employed, without departing from the scope of the present invention, which is defined by the claims. Accordingly, it is expressly intended that all such variations, changes and equivalents which fall within the scope of the present invention as defined in the claims, be embraced thereby.

## Claims

1. A vehicle rear seat (10), comprising:
a plurality of seats (11R, 11C, 11L), which is configured to be arranged side by side in a vehicle width direction in a rear seat row located in a rear side in a vehicle; and
a seating detection device, the seating detection device comprising:
a first seating sensor (20R, 20L) installed in each (11R, 11L) of opposite ends of the plurality of seats (11R, 11C, 11L), the first seating sensor being located in a seating surface portion (12R, 12L) of the corresponding seat; and
a plurality of first load detection switches (C1, C2, C3, C4) installed in the first seating sensor (20R, 20L) to be brought into a conducting state when a predetermined load is applied thereto, the plurality of first load detection switches being arranged side by side in the vehicle width direction,
wherein, among the plurality of first load detection switches, two adjacent first load detection switches, which are installed at any one side of a first reference line (L1), which extends in a vehicle longitudinal direction of the seating surface portion, in the vehicle width direction, are connected in series, and two adjacent first load detection switches (C2, C3), which are connected in parallel and arranged with the first reference line (L1) being interposed therebetween, and two first load detection switches (C1, C4), which are connected in parallel and installed at opposite ends, are connected in series.

2. The vehicle rear seat (10) according to claim 1, wherein the vehicle rear seat (10) includes three seats (11R, 11C, 11L), and
each of the seats (11R, 11L) at the opposite ends of the vehicle rear seat in the vehicle width direction is provided with the first seating sensor (20R, 20L).

3. The vehicle rear seat (10) according to claim 1 or 2, wherein the first seating sensor includes a first load detection group (G1) that includes four first load detection switches.

4. The vehicle rear seat (10) according to claim 3, wherein the first load detection group (G1) is linearly symmetrically installed about the first reference line (L1).

5. The vehicle rear seat (10) according to any one of claims 1 to 4, wherein the first seating sensor (20R, 20L) includes:
two first load detection groups (G1, G1) arranged to be approximately parallel to each other in the vehicle width direction;
a connecting portion (23) configured to connect central portions of the two first load detection groups (G1, G1); and
an extension portion (24) connected to a central portion of the connecting portion to extend in the vehicle width direction.

6. The vehicle rear seat (10) according to any one of claims 1 to 5, wherein the first seating sensor (20R, 20L) is a membrane switch.

7. The vehicle rear seat (10) according to any one of claims 1 to 6, wherein the seating detection device further comprises:
a second seating sensor (20C) located in the seating surface portion (12C) of a center seat (11C) of the vehicle rear seat (10) in the vehicle width direction; and
a plurality of second load detection switches (C1, C2, C3, C4) installed in the second seating sensor (20C) to be brought into a conducting state when a predetermined load is applied thereto, the second load detection switches being arranged side by side in the vehicle longitudinal direction,
wherein, among the plurality of second load detection switches, two adjacent second load detection switches (C1, C2, C3, C4), which are installed at any one side of a second reference line (L2), which extends in the vehicle width direction of the seating surface portion (12C), in the vehicle longitudinal direction, are connected in series, and two adjacent second load detection switches (C2, C3), which are connected in parallel and arranged with the second reference line being interposed therebetween, and two second load detection switches (C1, C4), which are connected in parallel and installed at opposite ends, are connected in series.

8. The vehicle rear seat (10) according to claim 7, wherein the second seating sensor (20C) includes a second load detection group (G2) that includes four second load detection switches.

9. The vehicle rear seat (10) according to claim 8, wherein the second load detection group (G2) is linearly symmetrically installed about the second reference line (L2).

10. The vehicle rear seat (10) according to any one of claims 7 to 9, wherein the second seating sensor includes:
two second load detection groups (G2, G2) arranged to be approximately parallel to each other in the vehicle longitudinal direction;
a connecting portion (23C) configured to connect central portions of the two second load detection groups (G2, G2); and
an extension portion (24C) connected to a central portion of the connecting portion (23C) to extend in the vehicle longitudinal direction.

11. The vehicle rear seat (10) according to any one of claims 7 to 10, wherein the second reference line (L2) is arranged to cross the first reference line (L1).

12. The vehicle rear seat (10) according to any one of claims 7 to 11, wherein the first seating sensor (20R, 20L) and the second seating sensor (20C) have the same shape.

13. The vehicle rear seat (10) according to any one of claims 7 to 12, wherein the second seating sensor (20C) is a membrane switch.

## Patentansprüche

1. Fahrzeugrücksitz (10), umfassend:
mehrere Sitze (11R, 11C, 11L), die konfiguriert sind, um nebeneinander in einer Fahrzeug-Breitenrichtung in einer Rücksitzreihe, die sich in einer Rückseite in einem Fahrzeug befindet, angeordnet zu sein, und
eine Sitzerfassungsvorrichtung, wobei die Sitzerfassungsvorrichtung umfasst:
einen ersten Sitzsensor (20R, 20L), der in jedem (11R, 11L) gegenüberliegenden Ende der mehreren Sitze (11R, 11C, 11L) installiert ist, wobei sich der erste Sitzsensor in einem Sitzflächenabschnitt (12R, 12L) des entsprechenden Sitzes befindet, und
mehrere erste Lasterfassungsschalter (C1, C2, C3, C4), die in dem ersten Sitzsensor (20R, 20L) installiert sind, um in einen leitenden Zustand gebracht zu werden, wenn eine vorbestimmte Last darauf aufgebracht wird, wobei die mehreren Lasterfassungsschalter nebeneinander in der Fahrzeug-Breitenrichtung angeordnet sind,
wobei unter den mehreren Lasterfassungsschaltern zwei benachbarte Lasterfassungsschalter, die an einer beliebigen Seite einer ersten Referenzlinie (L1) installiert sind, die sich in eine Fahrzeug-Längsrichtung des Sitzflächenabschnitts erstreckt, in der Fahrzeug-Breitenrichtung in Reihe geschaltet sind, und zwei benachbarte erste Lasterfassungsschalter (C2, C3), die parallel geschaltet und mit der ersten Referenzlinie (L1), die dazwischen zwischengeordnet ist, angeordnet sind, und zwei erste Lasterfassungsschalter (C1, C4), die parallel geschaltet und an gegenüberliegenden Enden installiert sind, in Reihe geschaltet sind.

2. Fahrzeugrücksitz (10) nach Anspruch 1, wobei der Fahrzeugrücksitz (10) drei Sitze (11R, 11C, 11L) aufweist und
jeder der Sitze (11R, 11L) an den gegenüberliegenden Enden des Fahrzeugrücksitzes in der Fahrzeug-Breitenrichtung mit dem ersten Sitzsensor (20R, 20L) bereitgestellt ist.

3. Fahrzeugrücksitz (10) nach Anspruch 1 oder 2, wobei der erste Sitzsensor eine erste Lasterfassungsgruppe (G1) aufweist, die vier erste Lasterfassungsschalter aufweist.

4. Fahrzeugrücksitz (10) nach Anspruch 3, wobei die erste Lasterfassungsgruppe (G1) linear symmetrisch um die erste Referenzlinie (L1) installiert ist.

5. Fahrzeugrücksitz (10) nach einem der Ansprüche 1 bis 4, wobei der erste Sitzsensor (20R, 20L) aufweist:
zwei erste Lasterfassungsgruppen (G1, G1), die angeordnet sind, um annähernd parallel zueinander in der Fahrzeug-Breitenrichtung zu sein,
einen Verbindungsabschnitt (23), der konfiguriert ist, um mittige Abschnitte der zwei ersten Lasterfassungsgruppen (G1, G1) zu verbinden und
einen Verlängerungsabschnitt (24), der mit einem mittigen Abschnitt des Verbindungsabschnitts verbunden ist, um sich in die Fahrzeug-Breitenrichtung zu erstrecken.

6. Fahrzeugrücksitz (10) nach einem der Ansprüche 1 bis 5, wobei der erste Sitzsensor (20R, 20L) ein Membranschalter ist.

7. Fahrzeugrücksitz (10) nach einem der Ansprüche 1 bis 6, wobei die Sitzerfassungsvorrichtung ferner umfasst:
einen zweiten Sitzsensor (20C), der sich in dem Sitzflächenabschnitt (12C) eines Mittelsitzes (11C) des Fahrzeugrücksitzes (10) in der Fahrzeug-Breitenrichtung befindet, und
mehrere zweite Lasterfassungsschalter (C1, C2, C3, C4), die in dem zweiten Sitzsensor (20C) installiert sind, um in einen leitenden Zustand gebracht zu werden, wenn eine vorbestimmte Last darauf aufgebracht wird, wobei die zweiten Lasterfassungsschalter nebeneinander in der Fahrzeug-Längsrichtung angeordnet sind,
wobei unter den mehreren zweiten Lasterfassungsschaltern, zwei benachbarte zweite Lasterfassungsschalter (C1, C2, C3, C4), die an einer beliebigen Seite einer zweiten Referenzlinie (L2) installiert sind, die sich in eine Fahrzeug-Breitenrichtung des Sitzflächenabschnitts (12C) erstreckt, in der Fahrzeug-Längsrichtung in Reihe geschaltet sind, und zwei benachbarte zweite Lasterfassungsschalter (C2, C3), die parallel geschaltet und mit der zweiten Referenzlinie, die dazwischen zwischengeordnet ist, angeordnet sind, und zwei zweite Lasterfassungsschalter (C1, C4), die parallel geschaltet und an gegenüberliegenden Enden installiert sind, in Reihe geschaltet sind.

8. Fahrzeugrücksitz (10) nach Anspruch 7, wobei der zweite Sitzsensor (20C) eine zweite Lasterfassungsgruppe (G2) aufweist, die vier zweite Lasterfassungsschalter aufweist.

9. Fahrzeugrücksitz (10) nach Anspruch 8, wobei die zweite Lasterfassungsgruppe (G2) linear symmetrisch um die zweite Referenzlinie (L2) installiert ist.

10. Fahrzeugrücksitz (10) nach einem der Ansprüche 7 bis 9, wobei der zweite Sitzsensor aufweist:
zwei zweite Lasterfassungsgruppen (G2, G2), die angeordnet sind, um annähernd parallel zueinander in der Fahrzeug-Längsrichtung zu sein,
einen Verbindungsabschnitt (23C), der konfiguriert ist, um mittige Abschnitte der zwei zweiten Lasterfassungsgruppen (G2, G2) zu verbinden und
einen Verlängerungsabschnitt (24C), der mit einem mittigen Abschnitt des Verbindungsabschnitts (23C) verbunden ist, um sich in die Fahrzeug-Längsrichtung zu erstrecken.

11. Fahrzeugrücksitz (10) nach einem der Ansprüche 7 bis 10, wobei die zweite Referenzlinie (L2) angeordnet ist, um die erste Referenzlinie (L1) zu schneiden.

12. Fahrzeugrücksitz (10) nach einem der Ansprüche 7 bis 11, wobei der erste Sitzsensor (20R, 20L) und der zweite Sitzsensor (20C) die gleiche Form haben.

13. Fahrzeugrücksitz (10) nach einem der Ansprüche 7 bis 12, wobei der zweite Sitzsensor (20C) ein Membranschalter ist.

## Revendications

1. Banquette arrière de véhicule (10), comprenant :
une pluralité de sièges (11R, 11C, 11L), qui sont configurés pour être agencés côte à côte dans une direction de la largeur de véhicule dans une rangée de sièges arrière située à l'arrière d'un véhicule ; et
un dispositif de détection d'assise, le dispositif de détection d'assise comprenant :
un premier capteur d'assise (20R, 20L) installé dans chacune (11R, 11L) des extrémités opposées de la pluralité de sièges (11R, 11C, 11L), le premier capteur d'assise étant situé dans une partie de surface d'assise (12R, 12L) du siège correspondant ; et
une pluralité de premiers commutateurs de détection de charge (C1, C2, C3, C4) installés dans le premier capteur d'assise (20R, 20L) qui sont amenés à passer dans un état conducteur quand une charge prédéfinie leur est appliquée, la pluralité de premiers commutateurs de détection de charge étant agencés côte à côte dans la direction de la largeur de véhicule,
dans laquelle, parmi la pluralité de premiers commutateurs de détection de charge, deux premiers commutateurs de détection de charge adjacents, qui sont installés d'un côté quelconque d'une première ligne de référence (L1), laquelle s'étend dans une direction de la longueur de véhicule de la partie de surface d'assise, dans la direction de la largeur de véhicule, sont connectés en série, et deux premiers commutateurs de détection de charge adjacents (C2, C3), qui sont connectés en parallèle et agencés de façon que la première ligne de référence (L1) soit interposée entre eux, et deux premiers commutateurs de détection de charge (C1, C4), qui sont connectés en parallèle et installés à des extrémités opposées, sont connectés en série.

2. Banquette arrière de véhicule (10) selon la revendication 1, dans laquelle la banquette arrière de véhicule (10) comprend trois sièges (11R, 11C, 11L), et
chacun des sièges (11R, 11L) aux extrémités opposées de la banquette arrière de véhicule dans la direction de la largeur de véhicule est pourvu du premier capteur d'assise (20R, 20L).

3. Banquette arrière de véhicule (10) selon la revendication 1 ou 2, dans laquelle le premier capteur d'assise comprend un premier groupe de détection de charge (G1) qui comprend quatre premiers commutateurs de détection de charge.

4. Banquette arrière de véhicule (10) selon la revendication 3, dans laquelle le premier groupe de détection de charge (G1) est installé de manière linéairement symétrique par rapport à la première ligne de référence (L1).

5. Banquette arrière de véhicule (10) selon l'une quelconque des revendications 1 à 4, dans laquelle le premier capteur d'assise (20R, 20L) comprend :
deux premiers groupes de détection de charge (G1, G1) agencés de façon à être sensiblement parallèles l'un à l'autre dans la direction de la largeur de véhicule ;
une partie de connexion (23) configurée pour connecter les parties centrales des deux premiers groupes de détection de charge (G1, G1) ; et
une partie d'extension (24) connectée à une partie centrale de la partie de connexion de façon à s'étendre dans la direction de la largeur de véhicule.

6. Banquette arrière de véhicule (10) selon l'une quelconque des revendications 1 à 5, dans laquelle le premier capteur d'assise (20R, 20L) est un commutateur à membrane.

7. Banquette arrière de véhicule (10) selon l'une quelconque des revendications 1 à 6, dans laquelle le dispositif de détection d'assise comprend en outre :
un second capteur d'assise (20C) situé dans la partie de surface d'assise (12C) d'un siège central (11C) de la banquette arrière de véhicule (10) dans la direction de la largeur de véhicule ; et
une pluralité de seconds commutateurs de détection de charge (C1, C2, C3, C4) installés dans le second capteur d'assise (20C) qui sont amenés à passer dans un état conducteur quand une charge prédéfinie leur est appliquée, les seconds commutateurs de détection de charge étant agencés côte à côte dans la direction de la longueur de véhicule,
dans laquelle, parmi la pluralité de seconds commutateurs de détection de charge, deux seconds commutateurs de détection de charge adjacents (C1, C2, C3, C4), qui sont installés d'un côté quelconque d'une seconde ligne de référence (L2), laquelle s'étend dans la direction de la largeur de véhicule de la partie de surface d'assise (12C), dans le sens de la longueur du véhicule, sont connectés en série, et deux seconds commutateurs de détection de charge adjacents (C2, C3), qui sont connectés en parallèle et agencés de façon que la seconde ligne de référence soit interposée entre eux, et deux seconds commutateurs de détection de charge (C1, C4), qui sont connectés en parallèle et installés à des extrémités opposées, sont connectés en série.

8. Banquette arrière de véhicule (10) selon la revendication 7, dans laquelle le second capteur d'assise (20C) comprend un second groupe de détection de charge (G2) qui comprend quatre seconds commutateurs de détection de charge.

9. Banquette arrière de véhicule (10) selon la revendication 8, dans laquelle le second groupe de détection de charge (G2) est installé de manière linéairement symétrique par rapport à la seconde ligne de référence (L2).

10. Banquette arrière de véhicule (10) selon l'une quelconque des revendications 7 à 9, dans laquelle le second capteur d'assise comprend :
deux seconds groupes de détection de charge (G2, G2) agencés de façon à être sensiblement parallèles l'un à l'autre dans la direction de la longueur de véhicule ;
une partie de connexion (23C) configurée pour connecter les parties centrales des deux seconds groupes de détection de charge (G2, G2) ; et
une partie d'extension (24C) connectée à une partie centrale de la partie de connexion (23C) de façon à s'étendre dans la direction de la longueur de véhicule.

11. Banquette arrière de véhicule (10) selon l'une quelconque des revendications 7 à 10, dans laquelle la seconde ligne de référence (L2) est agencée de façon à couper la première ligne de référence (L1).

12. Banquette arrière de véhicule (10) selon l'une quelconque des revendications 7 à 11, dans laquelle le premier capteur d'assise (20R, 20L) et le second capteur d'assise (20C) ont la même forme.

13. Banquette arrière de véhicule (10) selon l'une quelconque des revendications 7 à 12, dans laquelle le second capteur d'assise (20C) est un commutateur à membrane.
